# EUROPEAN PATENT APPLICATION

(11) **EP 3 206 099 A1**
(43) Date of publication of application: **16.08.2017**
(21) Application number: 16155543.8
(22) Date of filing: 12.02.2016
(51) Int. Cl.: G05B 19/406, G05B 19/409, G05B 19/4068

(54) **AN MMI AND A METHOD FOR CONTROLLING AN NC MACHINE TOOL PROCESS**

(71) Applicant: ARTIS GmbH, 21272 Egestorf (DE)
(72) Inventor: EUHUS, Dirk, 29643 Neuenkirchen (DE); KADDOUR, Rabih, 30161 Hannover (DE)
(74) Representative: Wegner, Hans

(57) **Abstract**

The invention relates to a man-machine interface (MMI) (182, 107) adapted for controlling a numerically controlled (NC) machine tool process which comprises: (a) at least one port (135, 145) to a computer-aided manufacturing (CAM) system (215) providing CAM data (220) for at least one processing step for processing (250) a workpiece (190) by the NC machine tool (140); and / or (b) at least one port (135, 145) to a computer-aided design (CAD) system (205) providing CAD data (210) for the workpiece (190) to be processed by the NC machine tool (140); and / or (c) at least one connection (122) to a picture source (125) providing at least one picture (270) of the workpiece (190) during processing (250); and (d) a means for displaying an overlay (185) of at least two of: the CAM data (220), the CAD data (210), and the at least one picture (270) of the workpiece (190).

## Description

### 1. Field of the invention

The present invention relates to a man-machine interface (MMI) and a method for controlling a numerically controlled (NC) machine tool process.

### 2. Background of the invention

Machine tools are key elements in many production facilities. Production facilities have to fulfil high demands with respect to productivity. In parallel, the quality of the manufactured products or workpieces has to meet high quality requirements. These conflicting requirements can to a large extent be fulfilled by a high degree of automation of production facilities. However, an automatic production can generate a large quantity of scrap parts or defective parts in a short period if an error is not detected in time.

Therefore, it is necessary to carefully monitor each step of an automated manufacturing process. For this purpose, the process of the generation of a control program for controlling a machine tool is verified in detail. Furthermore, machine tools are monitored by sensors or sensor systems controlled by a monitoring system during processing of a workpiece in order to be able to respond fast and appropriately to a situation when an error occurs.

A number of monitoring systems are already available for monitoring the operation of a machine tool. The applicant offers monitoring systems under the product names "Ge*nior Modular*" and "*CTM*"*.* Further, the applicant develops sensors for monitoring a tool during its operation in a machine tool, as for example disclosed in the German patents DE 10 2004 051 145 B4 or DE 10 2006 034 823 B4, and also introduces new functions of a monitoring system as disclosed in the European patent EP 2 476 511 B1.

Modern systems for monitoring a machine tool have powerful interfaces to transmit instructions and data from the monitoring system to the machine tool. Advanced CNC (computerized numerical control) controlled machine tools typically have a programmable logic controller (PLC). The monitoring system communicates with the PLC of a machine tool and controls the machine tool by means of this interface.

A manufacturing process of a workpiece typically starts with the generation of a three-dimensional (3D) computer-aided design (CAD) model. The CAD model is carefully checked whether it corresponds to the workpiece to be manufactured.

Based on the CAD model a computer-aided manufacturing (CAM) software is preferably used to generate a numerically controlled (NC) program which controls the operation of the machine tool during a production process (i.e. a processing process) of the workpiece by a machine tool. The CAM software system generates a respective tool path from the tool tray to the processing site at the workpiece for each tool to be used for manufacturing the workpiece. It also creates the tool paths during the processing step, and the return to the tool tray after finalizing the processing step. The tool paths are visualized at a monitor of the computer system the CAM software is running on. Thus, the CAM program determines all details of the processing process or the production data of the workpiece. During the generation of the CAM program, it is carefully checked that the CAM program does not contain any detrimental defects.

At the end of the process of the CAM program generation, the CAM program is simulated in order to check whether the specific CAM program is free of errors. For example, the paths of the various tools applied during the manufacturing process must not lead to an unintentional collision between a tool and the workpiece which could damage or destroy the workpiece and/or the tool and components of the machine tool. This is particularly important for a milling process in which a collision between the workpiece and parts of the machine tool may lead to a damage of the workpiece. Monitoring tools are available which display the signals in the domains time, path or frequency in a two-dimensional plot.

In a final step, a machine specific NC program is automatically generated by a postprocessor of the CAM system. The machine specific NC program typically contains G-code and M-codes. The NC program generation process is comprehensively checked or simulated. However, the step of the generation of the machine specific NC program performed by the postprocessor cannot be tested. It is difficult to identify errors which occurred at the generation of the machine specific NC program.

The machine specific NC program is then transmitted to the machine tool, which physically performs the processing process. Additionally, some instructions are also transmitted to the machine tool, which instructs a machine operator to enter and/or to change instructions or commands of the NC programs in order to adapt the monitoring system of the machine tool to the specific processing process. The machine operator adjusts the monitoring system by inputting the respective instructions into and / or by adapting commands of the NC program. Then, the machine operator starts the physical processing process of the workpiece by starting the NC program.

The setting process of the monitoring system at the machine is a critical step for the yield of processing process. The optimal setting of the monitoring system is typically the last possibility in the manufacturing process to avoid the generation of scrap parts and / or a damage of the tool applied for the processing step in the machine tool. The adjustment is performed in the production environment of a noisy workshop. Further, the machine operator may be pressed for time.

The German patent DE 10 2012 207 916 B3 discloses a method for automating the adjustment of a monitoring system in order to at least partially free the machine operator from this task.

The patent CN 103 439 919 B describes a closed loop control method in a CAD/CAM environment. The NC program is provided the machine tool outside of the closed loop. Within the closed loop CAD/CAM data are provided the machine tool, wherein XML (extensible markup language) is used as a data carrier for the provision of the CAD/CAM data to the machine tool.

The patent application CN 103 197 606 A describes a bi-directional data flow between the CAD system, the CAM system and the machine tool so that design departments can clearly understand the needs of the physical manufacturing process in the workshop. Further, the production planning can quickly be adjusted to changing requirements.

The methods of the above documents do not provide all information at the machine tool necessary to adjust a monitoring system to a processing process in a best possible manner. At least, these methods do not provide the information in a manner which is best suited to adapt the monitoring system to the respective processing step at the machine tool.

It is therefore one object of the present invention to provide a means and a method, which allows an improved usage of a monitoring system of a machine tool.

### 3. Summary of the invention

According to a first aspect of the invention, a man-machine interface (MMI) according to claim 1 is provided. In an embodiment, a MMI is adapted for controlling a numerically controlled (NC) machine tool process, it comprises: (a) at least one port to a computer-aided manufacturing (CAM) system providing CAM data for at least one processing step for processing a workpiece by the NC machine tool; and / or (b) at least one port to a computer-aided design (CAD) system providing CAD data for the workpiece to be processed by the NC machine tool; and / or (c) at least one connection to a picture source providing at least one picture of the workpiece during processing; and (d) a means for displaying an overlay of at least two of: the CAM data, the CAD data and the at least one picture of the workpiece.

The MMI displays an overlay of CAD data or design data, CAM data or production data and / or at least one picture of the workpiece or a blank of the workpiece so that all necessary information are provided in a suitable way so that a monitoring system can best be configured for the processing process to be performed by the NC program loaded to the machine tool. Furthermore, a machine operator can perform a last check whether the NC program controlling the processing step will have any detrimental effect on the workpiece to be processed and / or to the tool(s) of the machine tool applied for the processing step based on the displayed overlay of information presented at the MMI.

In a further aspect, the overlay comprises a three-dimensional (3D) representation of the CAM data and at least one of the CAD data and the at least one picture of the workpiece.

For a quick overview of the processing step, it is beneficial to display production data in combination either with the design data or with a picture of the workpiece to be processed or the blank of the workpiece at the location where the processing will takes place. Further, the overlay also enables determining a path deviation between target values and actual values of one or more tool paths obtained from monitoring the processing process.

The overlay can comprise a three-dimensional representation. In particular, the overlay can comprise a three-dimensional perspective representation.

This kind of representation provides production data and design data in a manner, which is best suited to comprehend the features of the planned processing step so that the monitoring system can be configured for adequately monitoring the processing step. Furthermore, the overlay facilitates assigning a tool overload to a geometry defect of the workpiece. A visually detected geometry defect, which is typically colorized by the quality department, will be displayed in the overlay and can be matched to the respective tool overload. At the same time, an experienced machine operator can discover whether the processing step may smoothly be executed or may lead to problems.

The CAD data can comprise a CAD model. Further, the CAM data may comprise at least one of: a kind of a processing process, a type of at least one tool, an angle of attack of the at least one tool, target values of at least one portion of a tool path of the at least one tool used for processing the workpiece, position data of at least one portion of a tool path of the at least one tool, speed of the at least one tool along the at least one portion of the tool path, a rotational speed of at least one spindle of the machine tool during an execution of the at least one processing step, a torque of at least one spindle of the machine tool during the execution of the at least one processing step, a feed rate of the at least one spindle during the execution of the at least one processing step, and a feed rate of a work table holding the workpiece during the execution of the at least one processing step.

The representation may be a three-dimensional perspective representation of the CAD model and the overlay may contain the CAM data.

It is one of the benefits to provide a comprehensive summary of the data generated in the CAD and the CAM environment at the machine tool for the processing of a workpiece. The combined design and production data offer a unique chance to improve the yield of the subsequent processing step by optimizing the monitoring of the processing process and the processing itself by adding feed rate features.

A further aspect comprises graphically presenting at least one portion of the CAM data in the overlay.

Another aspect comprises means adapted to input at least one command, wherein the at least one command creates and / or modifies at least one monitoring step for the at least one processing step. The means adapted to input the at least one command may comprise a control panel having a display and a keyboard and / or a display having a touchpad. A further aspect comprises a connection adapted to a numerical control of the machine tool.

The means for displaying an overlay comprises a control panel, the control panel being adapted to display the overlay and / or at least one part of the NC program for processing the workpiece.

An inventive MMI comprises a control panel having at least one display, at least one input means, and at least one connection for controlling the machine tool.

The picture source may comprise at least one camera providing real-time pictures of the workpiece during processing. The picture source may comprise at least two cameras providing real-time pictures of different perspectives.

As an alternative to combine CAD and CAM data in an overlay, it is also possible to integrate production data in a picture of the workpiece to be processed or a blank of the workpiece. The respective overlay enables a machine operator to immediately decide whether the displayed workpiece fits to the processing step indicated by the production data.

The man-machine interface may be adapted to perform at least one of: rotating the overlay, zooming the overlay, presenting the overlay from different perspectives, storing the overlay, and adding information to the overlay. The addition of information may comprise adding information from different information sources to the overlay.

These features of the MMI enable the machine operator to obtain a spatial overview of the processing step. As a consequence, he can optimally set the monitoring system to the processing process. Additionally, the machinist can see whether the processing step cause any critical situation for the workpiece and / or a susceptible tool. Moreover, the machine operator may add information to the overlay which allows reconstructing the settings of the monitoring system for the processing of further workpieces later on.

In a further aspect, the means are adapted to install and / or to activate a process monitoring function for processing the workpiece by the NC machine tool.

The MMI does not only allow the machine operator to adjust a monitoring system of a machine tool to a specific processing process. It is also possible to install a process monitoring function specifically designed for the processing process to be executed at of the workpiece. The process monitoring function may be stored in a memory of the machine tool or the monitoring system. It is also possible to obtain the process monitoring function from a memory associated with the CAD or CAM system. Further, it is also conceivable to obtain the process monitoring function from an Intranet or via an external network. Moreover, the machine operator can also configure and / or activate the process monitoring function.

A further aspect comprises at least one port to an external network to transmit the overlay and / or to transmit the CAM data, the CAD data and / or the at least one picture of the workpiece.

It is an advantage of an inventive MMI that it can transmit the overlay from the machine tool to the CAD or CAM system. Thus, in particular, the CAM environment can be informed about the constraints in the workshop. Further, it is also possible to export the overlay via an external network for example to a client of the workpiece to be processed. Furthermore, a CAM expert can look at the overlay, for example, when being on a business trip and / or from at home. In an alternative approach the overlay is not transmitted, but the raw data needed for generating the overlay, i.e. the CAD data, the CAM data and / or the one or more pictures of the workpiece. The overly is then generated at a remote site.

The man-machine interface may be operable to convert the CAD data and the CAM data in a standard format. The standard format may comprise at least one of the formats: comma-separated values (CSV) and extensible markup language (XML).

The man-machine interface may further be operable to determine a sequence of tool paths to be displayed in the overlay from the CAM data.

In still another aspect, a method for controlling a processing of a workpiece by a numerically controlled (NC) machine tool comprises the steps of: (a) obtaining computer-aided manufacturing (CAM) data for at least one processing step for processing the workpiece by the NC machine tool; and / or (b) obtaining computer-aided design (CAD) data for the workpiece to be processed by the NC machine tool; and / or (c) obtaining at least one picture of the workpiece during processing; and (d) overlaying at least two of the CAM data, the CAD data, and the at least one picture of the workpiece to be processed.

A further aspect comprises the step of presenting the overlay on a control panel of a man-machine interface of the NC machine tool.

In another aspect overlaying comprises representing the CAM data, and at least one of the CAD data, and the at least one picture of the workpiece in a three-dimensional perspective view.

According to a further aspect overlaying comprises representing the CAM data, the CAD data, and the at least one picture of the workpiece in a three-dimensional perspective view.

The combination the CAD model, production data, and a physical image of the workpiece to be processed in an overlay or one image condenses a maximum of information for the adjustment of the monitoring system of a machine tool. Further, the image provides concentrated information to decide whether everything is correct with the planned processing step.

In still a further aspect overlaying comprises at least one of: rotating the overlay, zooming the overlay, presenting the overlay from different perspectives, storing the overlay, and adding information to the overlay.

The described method allows viewing of design data, production data, and / or a blank of the workpiece from various positions and various levels of detail. Thus, the overlay or image can be adapted to the workpiece, the processing step and / or the preferences of the machine operator. The machine operator can interactively look at all portions of a processing process.

A further aspect comprises the step of controlling the NC machine tool.

According to another aspect, controlling the NC machine tool comprises adapting a process monitoring function for processing the workpiece by the NC machine tool.

Finally, a computer program may comprise executable instructions for causing at least one computer system to perform a method according to one of be above aspects when executed. For example, the computer program may be executed on a remote computer system. In particular, the computer program may be executed by a mobile computer system.

### 4. Description of the drawings

In order to better understand the present invention and to appreciate its practical applications, the following figures are provided and referenced hereafter. It should be noted that the figures are given as examples only and in no way limit the scope of the invention.
- Fig. 1: schematically represents some important components of a machine tool, a workpiece and a monitoring system;
- Fig. 2: schematically shows some important components of a manufacturing process according to the prior art;
- Fig. 3: schematically presents an example for generating an overlay of CAD data, CAM data and / or a picture of the workpiece to be fabricated;
- Fig. 4: shows an overlay, which comprises a section of a CAD model combined with the tool path and torque data of a milling cutter for milling an indentation in a workpiece;
- Fig. 5: presents an overlay of a CAD model of a workpiece to be processed and the tool paths combined with torque data during the processing process;
- Fig. 6: represents an overlay of a picture of a workpiece to be processed recorded with a camera combined with CAD data of indentations to be milled in the work-piece and CAM data or tool paths and torque data of the tool during the processing process;
- Fig. 7: shows an overlay displayed at a remote computer system;
- Fig. 8: presents a MMI implemented on a remote computer system; and
- Fig. 9: depicts a flow chart of a method for controlling a processing of a workpiece by a numerically controlled (NC) machine too.

### 5. Detailed description of preferred embodiments

In the following, the present invention will be more fully described with reference to the accompanying figures, in which exemplary embodiments of the invention are illustrated. However, the present invention may be embodied in different forms and should not be construed as limited to the examples set forth herein. Rather, these examples are provided so that the disclosure will be thorough and will convey the scope of the invention to persons skilled in the art. The following examples describe a machine tool having a single spindle. However, the inventive method is not restricted to a machine tool having a single spindle. Rather machine tools having several spindles can also benefit from the inventive method. Moreover, the methods described in in this application can be applied to each kind of machine tools. It is also possible to implement an inventive man-machine interface into an industrial robot.

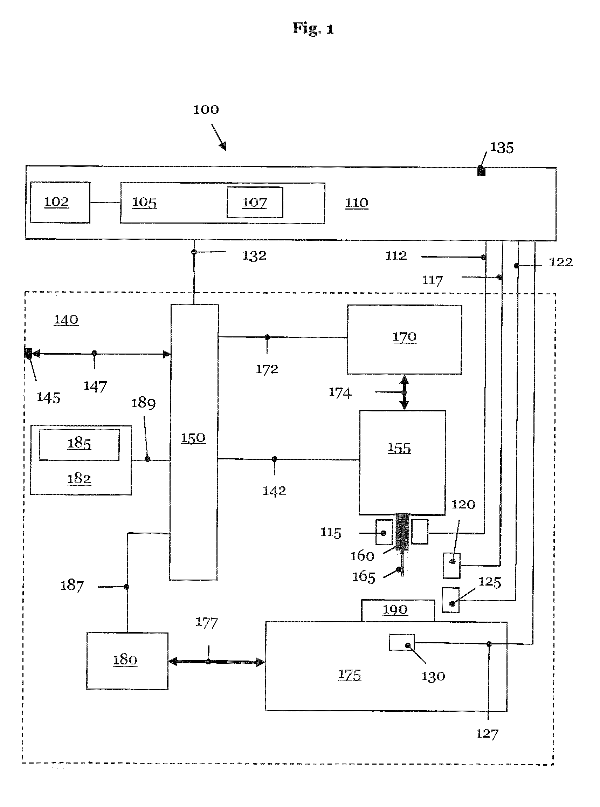

The diagram 100 of Fig. 1 schematically shows a combination of a monitoring system 110 and some essential components of a machine tool 140. The machine tool 140 has a main drive 155 with a spindle 160. The tool holder of the spindle 160 holds a tool 165. In the example of Fig. 1, the tool holder of the spindle 160 holds a cutter. However, the tool 165 of the machine tool 140 is not restricted to a cutter. Rather, the tool holder of the spindle 160 can hold any kind of rotating tool, as for example, a drill, a broach, or a tap (not shown in Fig. 1).

In the example of diagram 100, the main drive 155 is moved in the vertical direction by a first feed drive 170. The vertical direction is also called z-axis. It is indicated in the diagram 100 by the vertical arrow 174.

The tool 165 is directed to the workpiece 190 to be manufactured. The workpiece 190 to be manufactured is also called the blank of the workpiece 190. The workpiece to be manufactured is arranged on a moveable work table 175 or a workpiece slide of the machine tool 140. The workpiece 190 can be fixed on the work table 175 using known clamping devices. The defined method does not have any restrictions with respect to the workpiece 190 to be processed. Rather, the method described in this application can be applied to any kinds of workpieces 190.

A second feed drive 180 adjustably moves the work table 175 in a horizontal direction. The arrow 177 indicates the direction of movement of the work table 175.

The machine tool 140 is controlled by a programmable logic controller (PLC) 150. The numerically controlled (NC) program, or the control program described below, is executed by the PLC 150. The PLC 150 transmits signals via a connection 142 to the main drive 155 to control, for example, a predetermined speed of the tool 165. Simultaneously, the PLC 150 can obtain data from the main drive 155 with respect to an effective, i.e. measured, speed of the tool 165, or, for example, the current drawn by the main drive 155 via the connection 142.

Furthermore, the PLC 150 controls the first feed drive 170 by means of the connection 172. Similar to the main drive 155, the PLC 150 can receive data from the first feed drive 170 via the connection 172 which characterizes, for example, the present power consumption and / or the angular position of the first feed drive 170.

In detail, the PLC 150 does not control the main drive 160 and the first feed drive 170, but a control program running on the PLC 150. In modern machine tools 140, this control program is often a NC program or a computerized numeric control (CNC) program. This distinction is ignored in the following.

Moreover, the second feed drive 180 for the work table 175 operates in a similar manner as described above for the first feed drive 170. The second feed drive 180 is controlled by the PLC 150 via the connection 187.

In a first embodiment, the control panel 182 may function as a man machine interface (MMI) 182 of the machine tool 140. The PLC 150 can display predetermined settings and data obtained from the main drive 155 and the feed drives 170, 180 at the control panel 182 by means of the connection 189. The machine operator or machinist can start and stop the machine tool via the control panel 182. The control panel 182 or the MMI 182 can have a keypad (not shown in Fig. 1). Additionally or alternatively, the control panel 182 may comprise a touch pad (not indicated in Fig. 1). The machine operator may enter instructions which change or modify the control program executed on the PLC 150. In this way, the machine operator may change the progress of the processing process and may influence the monitoring of the processing process.

Further, when the control panel 182 operates as a MMI, it may contain a processor and / or a non-volatile memory (not represented in the diagram 100) in order to generate an overlay 185 or an image from CAD data, CAM data and / or one or more pictures of the workpiece to be processed. The overlay 185 may be indicated on the display of the control panel 182. Further, the processor of the control panel 182 can create a three-dimensional (3D) representation of the CAD data and the production data. Moreover, the processor may also generate an image which contains a picture of the workpiece 190 and production data. In addition, the processor of the control panel 182 may produce an overlay 185 containing the CAD model, production data and a physical picture of the workpiece 190. The overlay 185 can comprise the CAD model or a portion thereof and CAM data or a selected portion thereof. It can also comprise a picture of the workpiece or a portion of the picture of the workpiece and CAM data. It is also possible that the overlay 185 combines the CAD model and at least one picture of the workpiece to be processed. Preferably, the overlay 185 combines the CAD model, at least one picture of the workpiece and CAM data. Further, the overlay 185 represents the combined data in a perspective 3D image or representation. The non-volatile memory of the control panel may store the overlay 185 and / or the raw data obtained from a CAM system, a CAD system and /or a picture source.

The processor of the control panel 182 can also generate a 3D perspective representation of the overlay 185. The control panel 182, or the display of the control panel 182, may also display the NC program which controls the machine tool 140. Further, the processor may change the overlay 185 according to one or more instructions entered by a machine operator at the keyboard or touchpad of the control panel 182

The PLC 150 of the machine tool 140 has a port 145 which enables the PLC 150 to receive the control program via an Intranet and / or an external network and to transmit data to the Intranet and / or the external network via the connection 147.

In the example illustrated in the diagram 100, the monitoring system 110 comprises four sensors which measure data by means of which the processing process executed on the machine tool 140 can be monitored. The sensor 115 monitors the torque of the spindle 160 and transmits measurement data to the monitoring system 110 via the connection 112. For example, the sensor 115 can be fabricated in form of piezo quartzes which are arranged on the tool 165.

The second sensor 120 detects the feed 174 of the first feed drive 170. The sensor 120 is connected to the monitoring system 110 via the connection 117.

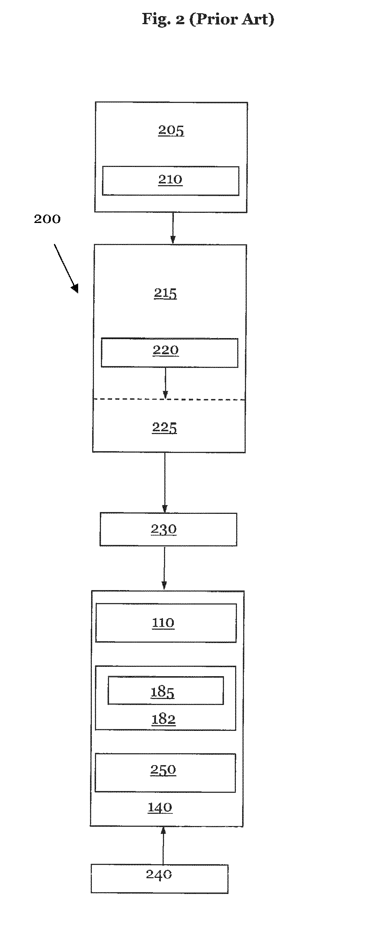

Furthermore, a third sensor 125 comprises a camera 125. The workpiece 190 or a part of the workpiece 190 is within the field of view of the camera 125. The camera 125 may have a CCD (charge coupled device) or a CMOS (complementary metal oxide semiconductor) sensor. The third sensor 125 in form of a camera 125 may be movable in three dimensions. Further, the camera 125 may also be rotatable (not shown in Fig. 2) and may have a zoom function. The camera 125 sends its picture data to the monitoring system 110 via the connection 122. The picture data of the camera 125 as well as of the other sensors 115, 120 and 130 may be stored in a non-volatile memory 105 of the monitoring system 110. The sensor 125 may also comprise two or more cameras which look from different directions onto the workpiece 190. Two or more cameras are preferred if the machine tool 140 has more than one spindle 160 (not shown in Fig. 2).

Moreover, a fourth sensor 130 is arranged in the work table 175 and connected to the monitoring system 110 by means of the connection 127. The sensor 130 detects the structure-borne sound generated by the processing process (a milling process in the example of Fig. 1).

The sensors 115, 120, 125 and 130 transmit data or measurement data via the connections 112, 117, 122 and 127 to the monitoring system 110. The connections between the sensors 11, 120,125 and 130 to the monitoring system may be wireless or wired. If possible, a wireless data transmission is preferred between the sensors 115, 120, 125, and 130 and the monitoring system 110, since no cables restrict the movements of the various parts of the machine tool 140.

In the simplest case the monitoring system 110 passes the measurement data of the sensors 115, 12 0, 125, 130 to the PLC 150 of the machine tool 140 by means of the connection 132. The PLC 150 can cause that all data or a portion of the data is indicated the machine operator at the MMI 182 or the control panel 182. Typically, the monitoring system 110 processes the measurement data provided by the sensors 115, 120, 125,and 130. For example, the monitoring system 110 may filter and / or amplify the measurement data. It may however also be necessary to deduce one or several other quantities which are more appropriate for monitoring of a specific processing process. The monitoring system 110 displays the deduced quantities at the control panel 182 via the PLC 150 of the machine tool 140.

The monitoring system 110 may comprise a processor 102 which can process the measurement data of the sensors 115, 120, 125 and 130. The processor 102 maybe a general purpose processor. It is also conceivable that the processor 102 may for example be implemented as an ASIC (application specific integrated circuit) or an FPGA (field programmable gate array). Further, the monitoring system 110 may comprise a non-volatile memory 105 connected to the processor 102, preferably a non-volatile memory 105 which can store data of the sensors 115, 120, 125,and 130. Moreover, the memory 105 of the monitoring system may also store one or more computer programs 107. In addition, the memory 105 may store the overlay 185 and / or the raw data obtained from a CAM system, a CAD system and /or a picture source.

Allowable limits which are specific for the processing process are often indicated together with characteristic quantities on the display of the control panel 182. The monitoring system 110 triggers an alarm if the measurement data of the sensors 115, 120, 125, 130 or a quantity deduced thereof, which are used for monitoring a processing process, surpass a limit. An alarm can cause an immediate stop of the machine tool 150, i.e. the main drive 155 and feed drives 170 and 180 are immediately stopped or only the feed drives 170 and 180 are stopped. Furthermore, an alarm may stop the machine tool 140 at the end of a processing step or may only cause the indication of a message for the machine operator at the control panel 182.

In a second embodiment, the MMI may be implemented as a computer program 107 stored in the memory 105 of the monitoring system 110. The processor 102 may execute the computer program 107 stored in the memory 105 and may generate an overlay 185 of the CAD model, CAM data and / or one or more pictures recorded by the sensor 125. The overlay 185 is transmitted via the PLC 150 and is displayed by the control panel 182 of the machine tool 140.

The functions of a MMI described in this application may be implemented in hardware, software executed by a processor of the monitoring system 110 or the machine tool 140, firmware, or any combination thereof. If implemented in software executed by a processor, the functions may be stored or transmitted over as one or more instructions or code on a computer-readable medium, as for example the non-volatile memory 105.

Different to the representation of the diagram 100, it is also possible that the monitoring system 110 has its own control panel which can be used to display data of one or more of the sensors 115, 120, 125 and 130 and / or to input commands into the monitoring system 110. The overlay 185 may also be displayed on the control panel of the monitoring system 110. Furthermore, the monitoring system 110 may have its own port 135 to communicate with an Intranet or the Internet in order to receive and / or transmit data (not shown in Fig. 1). The port 135 may provide a wired or a wireless connection to one or more external networks (not depicted in Fig. 1).

Fig. 2 schematically shows the various steps of a manufacturing process 200 or a processing step for the workpiece 190 according to the prior art. The process begins with the generation of a 3D CAD model 210 by means of a CAD system 205. The data of the 3D CAD model 210 are then transmitted to a CAM system 215. Typically, the data of the CAD model 210 are imported in the CAM system 215 in a standardized format, as for example Step or IGES.

In the CAM system 215 the processing process 250, or processing step 250, is planned which the machine tool 140 is to be processed later on. The planning process comprises a selection of the tools 165 required for the processing process 250 based on the data of the CAD model 210 for the workpiece 190 to be processed or manufactured. The CAM system 215 generates a path for each tool 165 beginning from a tool tray, the transport of the tool 165 to the usage site of the tool 165, the processing step, and the return of the tool 165 to the tool tray. The CAM system 215 also calculates the speed with which the tools 165 pass through for the various portions of the path. Further, the CAM 215 determines the rotational speed of the tool 165 as well as the feed rates of the feed drives 170 and 180. The description of the paths of all tools 165 including the respective speeds form the CAM program 220 for the workpiece 190 to be processed or manufactured.

After the generation process of the CAM program 220 is finalized, the CAM program 220 is simulated in the CAM system 215 to check whether it actually describes the processing process 250 as planned.

Then a postprocessor 225 generates a machine specific NC program 230 for the PLC 150 of the machine tool 140 from the CAM program 220 in an automated manner. As required the control program 230, or the NC program 230, can be stored within the CAM system 215, i.e. in a non-volatile memory of the CAM system (not represented in Fig. 2).

Prior to the execution of the processing process 250, the NC program 230 is transmitted from the CAM system 215 to the PCL 150 of the machine tool 140. The machine operator responsible for the machine tool 140 manually sets the monitoring system 110 for the specific processing process 250. For this purpose, the machinist has to add one or several instructions or command lines 240 at the respective positions of the NC program 230. This is performed by the control panel 182 of the machine tool 140.

For a reliable operation of the monitoring system 110, it is further mandatory to determine which sensor signals are used for monitoring the processing process 250 so that the monitoring system 110 can reliably fulfil its task.

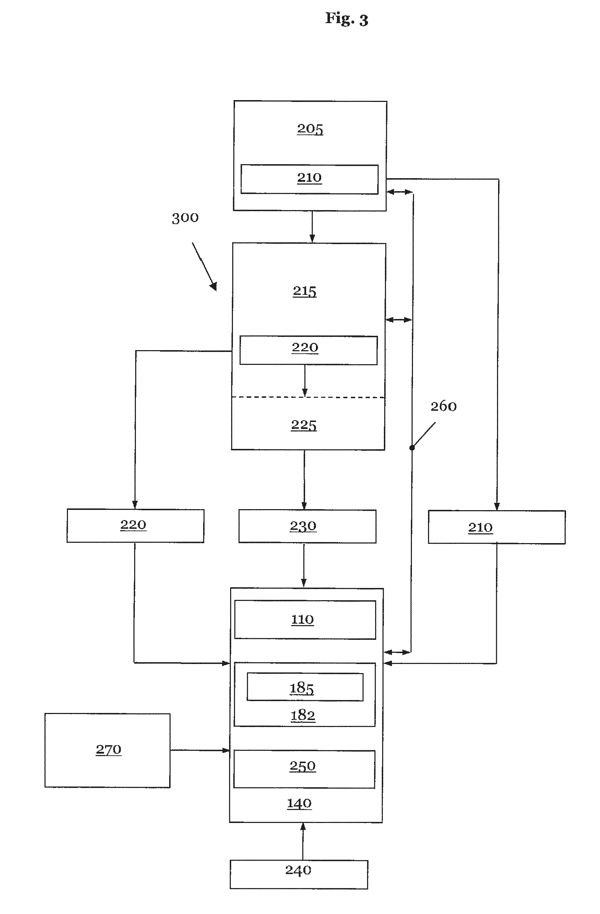

Fig. 3 schematically represents how the present invention removes the drawbacks of the present adjustment of a monitoring function of the monitoring system 110. The diagram 300 of Fig. 3 adds three features to the diagram 200 of Fig. 2. At first, there is a feedback channel 260 from the machine tool 140, or the monitoring system 110 of the machine tool 140, to the CAM system 215 and the CAD system 205. The feedback channel 260 may use the port 145 of the machine tool 140 and / or the port 35 of the monitoring system no. The feedback channel 260 can be used by the machine tool 140, the monitoring system 110 and / or the MMI 182, 107 to request CAD data 210 from the CAD system 205 and / or CAM data 220 from the CAM system 215. The CAD data 210 or the CAD model 210 and the CAM data 220 may be stored in a memory of the machine tool 140, the memory 105 of the monitoring system 110, and / or a memory of the MMI 182.

As a second difference to the diagram 200 of Fig. 2, the MMI 182, 107 receives one or more pictures 270 of the workpiece 190 to be processed. The picture(s) 270 can also be stored is a memory of the machine tool 140, the memory 105 of the monitoring system 110, and / or a memory of the MMI 182.

A processor of the MMI 182, or the processor 102 of the monitoring system 110, can process the CAD data 210, the CAM data 220 and / or at the least one picture 270 of the workpiece 270 to be processed in order to combine all data 210, 220, and 270 or at least data of two of the three data sources 210, 220, and 270. Processing the CAM data 220 may comprise the identification of a sequence of the tool paths to be monitored. In a next step, the identified portion of the CAM data 220 is converted in a standard format. Suitable formats are for example: comma-separated values (CSV) and extensible markup language (XML).

The processing may further comprise selecting a portion of the CAD data 210 which is relevant for the processing process 250 to be monitored by the monitoring system 110. Moreover, the processing may include correctly matching the selected CAM data 220 to the CAD model 210. Furthermore, the matching may also comprise correctly matching one or more pictures 270 of the workpiece 190 or a section a picture 270 of the workpiece 190 with the selected CAM data 220. The processing of the CAD data 210 and the picture 270 may include correctly matching the CAD data 210 and the picture data for a perspective 3D view of the combined data.

Finally, as a third difference to the prior art, the processor of the MMI 182, or the processor 102 of the monitoring system 110, can process the CAD data 210, the CAM data 220 and at least one picture 270 of the workpiece 190 to be processed in order to combine data of all three data sources 210, 220 and 270 in an overlay 185 or an image. The generated overlay 185 may be stored in a memory of the machine tool 140, a memory of the MMI 182, and / or the memory 105 of the monitoring system 110.

In the example presented in diagram 300, the processor of the MMI 182 or the processor 102 of the monitoring system 110 can initiate displaying the overlay 185 at the display of the MMI 182, and / or at a display of the monitoring system 110. Additionally, the processor of the MMI 182, or the processor 102 of the monitoring system 110, may interactively process the overlay 185 in response to an input by the machine operator entered via a keyboard and / or a touch pad of the control panel 182. The processor of the MMI 182, or the processor 102 of the monitoring system 110, may rotate the overlay, zoom the overlay, present the overlay 185 from different perspectives and / or may add information to the overlay 185.

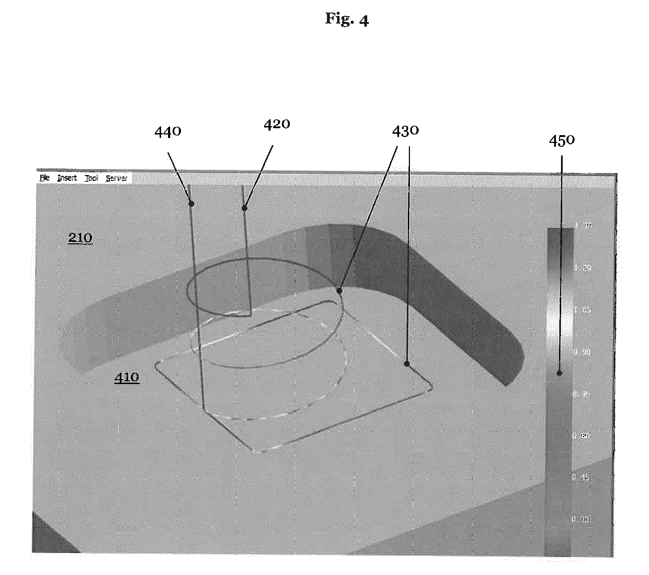

Fig. 4 shows a section of a CAD model 210 of a workpiece 190 having a rectangular indentation 410 with rounded corners in a perspective view. Further, Fig. 4 presents the tool path of the tool 165, which is a milling cutter in the example of Fig. 4. The processing process 250 starts with the path 420 from the tool tray to the processing site. The processing process 250 of the tools 165 is indicated by 430. After finalizing the processing process 250 the tools returns to the tool tray via the return path 440. In addition to the tool path 420, 430, 440, the CAM data 220 also indicate the torque of the milling cutter. The colour scale 450 on the right of Fig. 4 indicate the percentage of the torque of the tool 165, wherein the allowed torque is in the yellow range of the colour scale 450.

During passing through the tool paths 420 and 440, the tool 165 is not in contact with workpiece 190 so that it does not exert a torque (indicated in blue in the tool paths 520 and 440). When milling a circular indentation, the torque of the tools starts from a low value of the spindle torque (displayed in blue), passing through the green region and reaches numerical value of the torque (indicated in yellow) which corresponds to or is slightly above the allowed torque for the tool 165. However, when milling the rounded corners of the indentation 410 the torque of the tools 165 exceeds the allowable torque of the tool for longer time periods (denoted by the red line portion of the tool path 430.

The machine operator immediately recognizes from the torque indicated as colour values within the tool path 430 that the tool 165 has carefully to be monitored when milling the rounded corners of the indentation 410. Therefore, the machinist will adjust the monitoring system 110 based on the torque of the tool 165 indicated in the tool path 430.

Further, the surface quality of a processed workpiece 190 strongly depends on the tool paths 430 and the involved power and torques during the processing process 250. The presented three-dimensional (3D) overlay 185 supports the machine operator to determine optimally monitored tool paths 430 in order to avoid a deterioration of the surface quality of the workpiece 190, as for example a ripple of the workpiece surface.

Moreover, based on monitoring data, the overlay 185 allows to draw conclusions about the service behaviours of a potential tool 165 and to detect which forces act at which positions during the processing process 250. On the basis of this additional knowledge about the effects of spindle torques or forces on a processing process 250, in particular a milling process, the machine operator can significantly optimize the processing process 250.

Additionally, the overlay 185 provides numerous online information to the machine operator, as for example the spindle torque, the spindle current and its effect on the processing process 250. This information supports an optimal adjustment of the monitoring system 110 for the respective processing process 250.

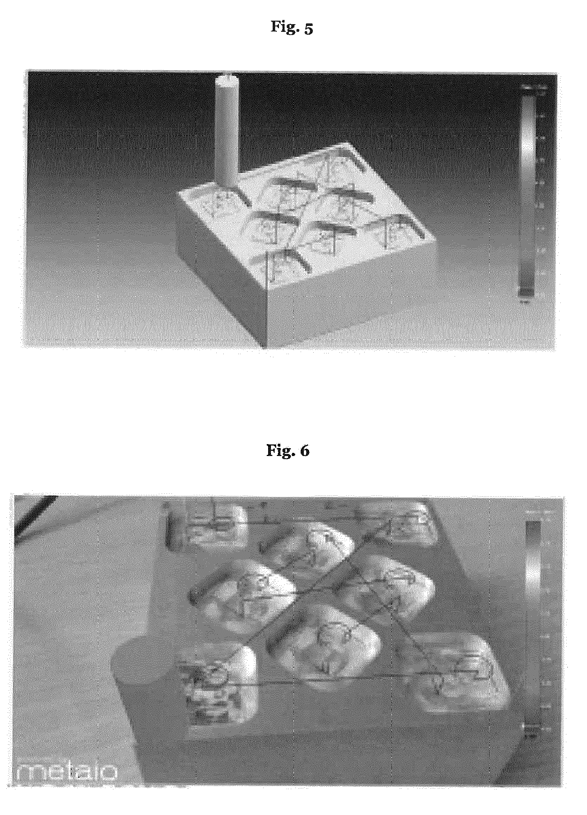

Fig. 5 represents a perspective view on a CAD model 210 of a workpiece 190 having eight of the indentations 410 of Fig. 4. Similar to Fig. 4, Fig. 5 shows the tool paths of the tool 165, a milling cutter, for milling the eight indentations into the workpiece 190. The overlay 185 of CAM data 220 combined with the CAD model 210 can be applied to effectively set the monitoring system 110 to the milling process to be performed at the workpiece 190.

Fig. 6 presents a picture 270 of a blank of a workpiece 190 recorded by a camera 125. Further, Fig. 6 shows eight indentations 410 to be milled in the blank of the workpiece 190. The indentations 410 are CAD data 210 which are projected on the blank of the workpiece 190. Moreover, Fig. 6 additionally contains the tool paths of a milling cutter applied for milling the indentations 410 in the blank of the workpiece 190. Apart from the tool paths, Fig. 6 also shows the torque exerted on the tool 165, i.e. the milling cutter, during the processing process 250, i.e. the milling process. Thus, the overlay 185 represented in Fig. 6 combines CAD data 210, CAM data 220 and a picture 270 of the workpiece 190 to be processed in one image. The overlay 185 of Fig. 6 can be used to adjust the monitoring system 110 so that it monitors the processing step 250, i.e. the milling process, in a best possible manner. The overlay 185 of Fig. 6 optimally supports the setting of the monitoring system 110 in that it graphically highlights critical processing steps of the processing process 250.

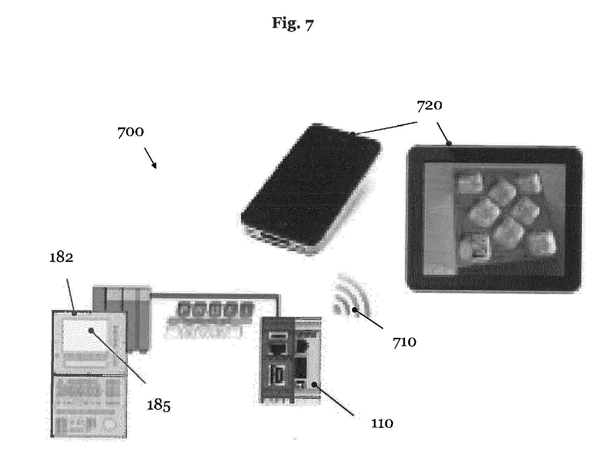

The diagram 700 of Fig. 7 illustrates that the overlay 185 can be transmitted to a remote computer system 720. The MMI 182 transmits the overlay 185 to the monitoring system 110. The monitoring system 110 communicates the overlay 185 via the port 135 of the monitoring system 110 and / or the port 145 of the machine tool 140 by means of the wireless network 710 to the remote computer system 720. In the exemplary diagram 700, the wireless network 810 comprises a wireless local area network (WLAN). Alternatively and / or in parallel the monitoring system 110 may transmit the overlay 185 to the remote computer system 720 by means of a wired local area network (LAN) (not shown in Fig. 7). In Fig. 7 the remote computer system 720 is a mobile computer system. The mobile computer system may for example be a tablet computer, laptop computer, a PDA (personal digital assistant) or a smartphone. It is also possible that the remote computer system 720 is implemented in form of a stationary computer system, like a PC (personal computer) or a workstation (not shown in Fig. 7).

In an alternative approach, the monitoring system 110 does not transmit the overlay 185, but the CAD data 210, the CAM data 220 and / or the picture 270 via the wireless network 710 (or a wired network) to the remote computer system 720. In this approach the remote computer system 720 has a MMI for generating the overlay 185 from the transmitted raw data 210, 220, and / or 270 and for displaying the overlay 185 on the display of the remote computer system 720.

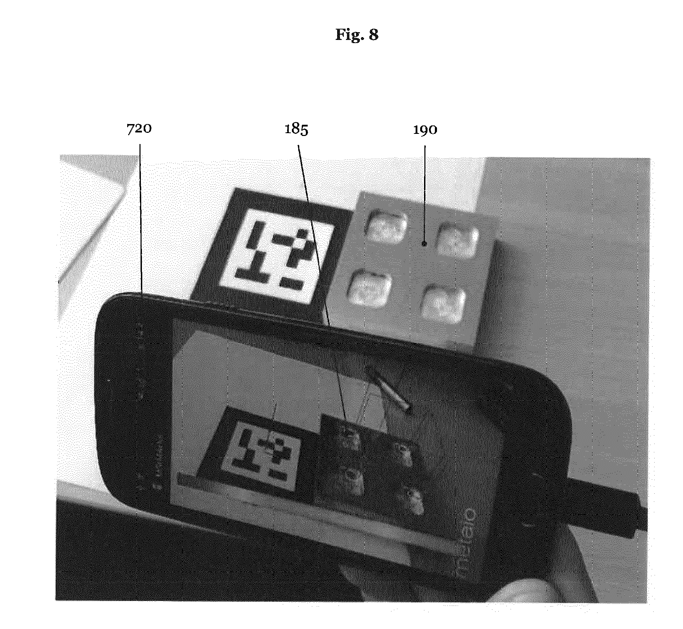

Fig. 8 presents in the upper part a workpiece 190 in which four indentations 410 are milled. The low part of Fig. 8 shows the remote computer system 720 which displays an overlay 185 comprising the workpiece 190 and CAM data 220 on its display. The picture 270 of the workpiece 190 which is part of the overlay 185 is recorded by the camera of a remote computer system 720. In the example of Fig. 8, the CAM data 220 contained in the overlay 185 comprise tool paths 430 of the tool 165 and the spindle torque involved in the milling process 250 for generating the indentations 410 in the workpiece 190. In particular, the overlay 185 combines the workpiece 190 and the CAD data 220 in a perspectively correct manner. Thus, the overlay 185 displays an augmented reality of the workpiece 190.

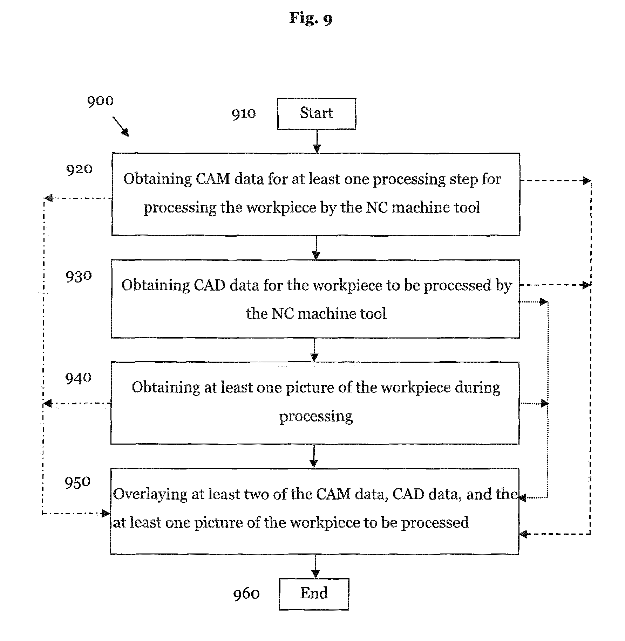

Finally, Fig. 9 depicts a flow chart 900 describing method steps for controlling a processing of a workpiece 190 by a numerically controlled (NC) machine tool 140. The method begins at step 910. In step 920, CAM data 220 are obtained for at least one processing step for processing 250 the workpiece 190 by the NC machine tool 140. The CAM data 220 may be obtained from the CAM system 215. Then, in step 930, CAD data 210 are obtained for the workpiece 190 to be processed by the NC machine tool 140. The CAD data 210 may be obtained from the CAD system 205. Further, in step 940, at least one picture 270 of the workpiece 190 is obtained during processing the workpiece 190. The at least one picture 270 of the workpiece 190 may be obtained from a sensor 125. Moreover, at step 950, the CAD data 210, the CAM data 220, and the at least one picture 270 of the workpiece 190 are overlaid. The overlay 185 may be performed by a MMI 182, 107 which may be implemented in hardware, software, firmware or a combination thereof. The method ends at step 960.

It will be appreciated that an overlay 185 can be generated from two of the data sources 210, 220, and 270 obtained when performing the method steps 920 to 940. The dotted, dashed and dash-dotted arrows graphically indicate the various options for generating an overlay 185.

## Claims

1. A man-machine interface (182, 107) adapted for controlling a numerically controlled machine tool process, the man-machine interface (182, 107) comprising:
a. at least one port (135, 145) to a computer-aided manufacturing system (215), CAM system, providing CAM data (220) for at least one processing step for processing (250) a workpiece (190) by the numerically controlled machine tool (140), NC machine tool; and / or
b. at least one port (135, 140) to a computer-aided design system (205), CAD system, providing CAD data (210) for the workpiece (190) to be processed by the NC machine tool (140); and / or
c. at least one connection (122) to a picture source (125) providing at least one picture (270) of the workpiece (190) during processing (250) ; and
d. a means for displaying an overlay (185) of at least two of: the CAM data (220), the CAD data (210), and the at least one picture (270) of the workpiece (190).

2. The man-machine interface (182, 107) of claim 1, wherein the overlay (185) comprises a three-dimensional representation of the CAM data (220) and at least one of the CAD data (210) and the at least one picture (270) of the workpiece (190).

3. The man-machine interface (182, 107) of claim 1 or 2, further comprising means adapted to input at least one command, wherein the at least one command creates and / or modifies at least one monitoring step for the at least one processing step.

4. The man-machine interface (182, 107) of any one of the preceding claims, further comprising a connection (132) adapted to numerically control the machine tool (140).

5. The man-machine interface (182, 107) of any one of the preceding claims, wherein the means for displaying the overlay (185) comprises a control panel, the control panel being adapted to display the overlay (185) and / or at least a part of the NC program (230) for processing the workpiece (190).

6. The man-machine interface (182, 107) of any one of the preceding claims, wherein the man-machine interface (182, 107) is adapted to perform at least one of: rotating the overlay (185), zooming the overlay (185), presenting the overlay (185) from different perspectives, storing the overlay (185), and adding information to the overlay (185).

7. The man-machine interface (182, 107) of any one of the preceding claims, further comprising means adapted to install and / or to activate a process monitoring function for processing (250) the workpiece (190) by the NC machine tool (140).

8. The man-machine interface (182, 107) of any one of the preceding claims, further comprising at least one port (135, 45) to an external network to transmit the overlay (185) and / or to transmit the CAM data (220), the CAD data (210), and / or the at least one picture (270) of the workpiece (190).

9. A method for controlling a processing of a workpiece (190) by a numerically controlled machine tool (140), NC machine tool, the method comprising the steps of:
a. obtaining computer-aided manufacturing data (220), CAM data, for at least one processing step for processing (250) the workpiece (190) by the NC machine tool (140); and / or
b. obtaining computer-aided design data (210), CAD data, for the workpiece (190) to be processed by the NC machine tool (140); and / or
c. obtaining at least one picture (270) of the workpiece (190) during processing (250); and
d. overlaying at least two of the CAM data (220), the CAD data (210), and the at least one picture (270) of the workpiece (190) to be processed.

10. The method of claim 9, further comprising the step of presenting the overlay (185) on a control panel of a man-machine interface (182) of the NC machine tool (140).

11. The method claim 9 or 10, wherein overlaying comprises representing the CAM data (220), and at least one of the CAD data (210) and the at least one picture (270) of the workpiece (190) in a three-dimensional view.

12. The method of claims 9-11, wherein overlaying comprises at least one of: rotating the overlay (185), zooming the overlay (185), presenting the overlay (185) from different perspectives, storing the overlay (185), and adding information to the overlay (185).

13. The method of claims 9-12, further comprising the step of controlling the NC machine tool (140).

14. The method of claim 13, wherein controlling the NC machine tool (140) comprises installing and / or activating a process monitoring function for processing the workpiece (190) by the NC machine tool (140).

15. A computer program (107) comprising executable instructions for causing at least one computer system to perform a method according to one of claims 9 to 14 when executed.
